# FASCICULE DE BREVET EUROPEEN

(11) **EP 3 282 523 B1**
(45) Date de publication et mention de la délivrance du brevet: **13.05.2020**
(21) Numéro de dépôt: 17179694.9
(22) Date de dépôt: 05.07.2017
(51) Int. Cl.: H01R 13/631, H01R 13/506, H01R 13/516, G02B 6/42, H01R 13/6582

(54) **FICHE DE CONNEXION À UNE EMBASE DE PANNEAU DE BOITIER D'ÉQUIPEMENT ÉLECTRONIQUE, MUNIE DE MOYENS D'AUTO-ALIGNEMENT**
STECKERSTIFT ZUR VERBINDUNG MIT EINER BUCHSE EINES GEHÄUSEPANEELS EINES ELEKTRONISCHEN GERÄTS, DAS MIT SELBSTEINSTELLUNGSMITTELN AUSGESTATTET IST
CONNECTION PLUG WITH A HOUSING PANEL BASE OF ELECTRONIC EQUIPMENT, PROVIDED WITH SELF-ALIGNMENT MEANS

(30) Priorité: 07.07.2016 FR 1656518
(43) Date de publication de la demande: 14.02.2018
(73) Titulaire: RADIALL, 93300 Aubervilliers (FR)
(72) Inventeur: DUPEUX, Benoit, 38470 VATILIEU (FR); BOURGEAS, Fabien, 38500 SAINT NICOLAS DE MACHERIN (FR); LOMUSCIO, Dominique, 38590 SILLANS (FR)
(74) Mandataire: Nony

(56) Documents cités:
- WO-A1-2012/101569
- CN-U- 202 167 673
- US-A1- 2011 123 157
- US-A1- 2012 252 256
- US-A1- 2013 016 493

## Description

### Domaine technique

La présente invention concerne une fiche intégrant une clé sans câble pour émission par réseau sans fil, de type wifi ou Bluetooth®, ou une fiche destinée à être montée sur au moins un câble supportant un ou plusieurs contacts, et à être connectée à une embase d'un panneau de boitier d'un équipement électronique.

Ces contacts peuvent être de type RJ45, de puissance, de données, combinés ou optiques. Ces contacts peuvent en particulier être une interface de convertisseur optoélectronique de type SFP/SFP+, ou des contacts optiques.

L'invention s'applique en particulier pour les fiches de connexion aux embases d'équipements électroniques qui mettent en œuvre plusieurs voies optiques et/ou électriques avec des connexions, que l'on retrouve en environnement extérieur et/ou en conditions sévères notamment dans les installations de télécommunications telles que des antennes-relais de téléphonie mobile, dans les réseaux de transmission de données à haut débit vers l'habitat ou l'industrie, dans les réseaux de caméras de surveillance ou encore pour la transmission de données dans des installations ferroviaires.

### Art antérieur

Il est connu, dans la plupart des équipements électroniques destinés à être implantés en environnement extérieur où il est nécessaire de réaliser des connexions entre fiche montée sur un câble et embase correspondante, de rapporter l'embase sur un des panneaux de boitier de l'équipement.

En particulier, l'embase comporte une platine de fixation qui est vissée sur le panneau. Les embases peuvent aussi être de forme circulaire, filetées avec le corps directement vissé dans le panneau ou maintenu par un écrou. Le corps peut aussi être assemblé en force dans le panneau.

On peut classer en deux catégories différentes, les configurations de montage existantes.

Dans la première, les contacts qui transmettent le signal sont supportés par l'embase. Dans cette configuration, il est très facile de résoudre les problèmes mécaniques pour aligner les contacts portés par la fiche et ceux portés par l'embase en ménageant les jeux et chanfreins de guidage requis.

Dans la deuxième catégorie, les contacts qui transmettent le signal sont supportés par un composant monté sur une carte de circuit électronique (carte de circuit) imprimé à l'intérieur du boitier de l'équipement.

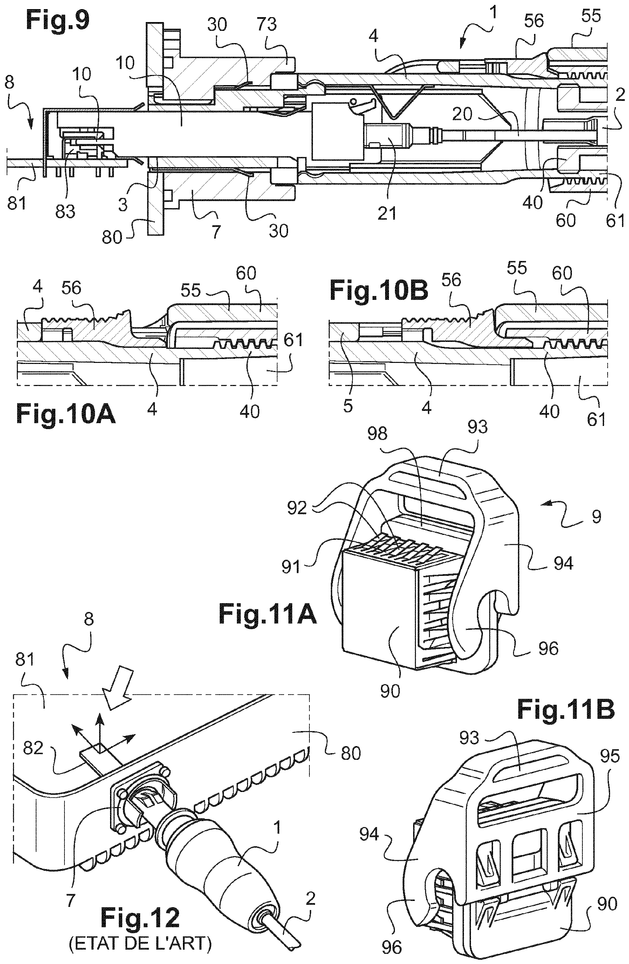

On a représenté schématiquement en figure 12, une telle configuration : la fiche 1 montée sur un câble optique 2 est logée dans une embase 7 rapportée par vissage sur le panneau 80 d'un boitier d'équipement électronique 8. La carte de circuit imprimé 81 de l'équipement 8 porte un composant électronique 82 qui supporte un ou plusieurs contacts 83 qui sont connectés avec ceux de la fiche.

Dans cette configuration, l'alignement des contacts supportés par la fiche 1 et de ceux supportés par le composant électronique 82 est problématique. En effet, il existe alors des tolérances de positionnement relatif entre les contacts de ces deux composants 1, 82 suivant les trois axes x, y et z de l'espace. Ces tolérances dépendent assez peu de la conception de la fiche mais beaucoup de la façon dont la carte de circuit imprimé 81 est intégrée dans le boitier de l'équipement.

Jusqu'à présent, pour positionner au mieux les contacts de fiche 1 par rapport à ceux du composant 91, il est usuel de procéder de deux manières différentes.

Ainsi, une première manière de faire consiste à effectuer un réglage de la position en x et y de l'embase lors de son montage sur le boitier de l'équipement électronique. Par exemple, la platine de l'embase comporte des trous de diamètre très supérieur à celui des vis de fixation, de sorte qu'il est possible de déplacer l'embase en x et en y relativement au panneau du boitier. Un outil peut être utilisé pour centrer l'embase par rapport au composant électronique et les vis sont alors serrées dans cette position.

Cette solution est évidemment contraignante et coûteuse. En outre, le temps de montage dédié peut être long lorsque l'équipement électronique doit mettre en œuvre une multitude de connecteurs, et donc d'embases à rapporter et à centrer. De plus, la position en z n'est pas nécessairement corrigée, ce qui implique de s'en remettre aux chaines de côtes de dimensionnement pour assurer le positionnement relatif entre le composant électronique et le(s) contact(s)de fiche.

L'autre manière de faire est possible lorsque la partie qui supporte les contacts du câble est montée flottante dans le corps de fiche. L'utilisateur effectue visuellement et manuellement, l'alignement desdits contacts du câble, avec ceux du composant électronique de l'équipement. Le corps de la fiche est alors verrouillé sur l'embase sans être forcément centré autour de la partie flottante dans le corps de fiche.

Le document CN 202167673 U divulgue le montage flottant d'un contact mâle de type micro USB relié à un câble dans un boitier en deux parties, les parties avant et arrière du boitier étant fixées l'une par rapport à l'autre par clipsage.

La demande US 2011/123157 A1 concerne une fiche de connecteur dans laquelle des contacts optiques directement connectés à un câble à fibre optique ou un convertisseur optoélectronique connectés à ces contacts sont logés et maintenus dans une partie avant du corps qui est montée coulissante par rapport à la partie arrière.

Il existe donc un besoin d'améliorer le montage d'une fiche sur une embase de boitier d'équipement électronique, afin de remédier à tout ou partie des inconvénients de l'art antérieur cités ci-dessus, notamment en vue de permettre un positionnement avec un alignement satisfaisant selon les trois axes entre le ou les contacts supporté(s) par une carte de circuit électronique de l'équipement électronique et le ou les contacts d'un câble sur lequel la fiche est montée.

Le but de l'invention est de répondre au moins en partie à ce besoin.

### Exposé de l'invention

Pour ce faire, l'invention concerne une fiche, destinée à être montée sur au moins un câble dont une extrémité supporte un ou plusieurs contacts, comprenant :
- un corps comprenant :
   - une partie avant en matériau conducteur électrique et qui s'étend selon un axe longitudinal (X), la partie avant étant conformée pour venir se loger dans une embase, la partie avant étant adaptée pour loger et maintenir le ou les contacts du câble ou au moins un convertisseur optoélectronique connecté au(x) contact(s) du câble;
   - une partie arrière formant un fourreau, conformée pour loger l'extrémité du câble supportant elle-même le(s) contact(s) ; la partie arrière étant montée flottante sur la partie avant;
- une pluralité de pattes flexibles en matériau conducteur électrique, réparties à la périphérie extérieure de la partie avant, les pattes flexibles étant adaptées pour rester en contact mécanique avec l'intérieur de l'embase lorsque la partie avant du corps est logée dans cette dernière ;
- un levier de verrouillage à une embase, le levier de verrouillage étant monté pivotant sur la partie arrière du corps de fiche, le levier comprenant deux crochets de verrouillage répartis de part et d'autre de la partie arrière et destinés à coopérer avec deux ergots de verrouillage répartis de part et d'autre de l'embase.

Le montage flottant de la partie arrière sur la partie avant du corps de la fiche, permet à cette partie avant de rester désaxée dans la cavité d'embase, même si la partie arrière du corps tend quant à elle à se réaligner avec ladite cavité, en particulier lors d'un verrouillage de la fiche sur l'embase au moyen du levier de verrouillage.

Grâce à l'invention, on s'assure d'un positionnement correct selon les trois axes x, y et z de l'espace du ou des contacts ou du (des) convertisseurs optoélectronique(s) supporté(s) par la fiche, relativement au(x) contact(s) supportés par la carte de circuit électronique d'un équipement dont le boitier est muni de l'embase de connexion à la partie avant de la fiche.

Cela est rendu possible grâce à la réalisation en deux parties du corps de fiche avec la combinaison judicieuse d'un montage flottant entre ces deux parties et des pattes flexibles autour de la partie avant. Ce montage flottant est permis par l'intégration de jeux dimensionnels importants entre les zones coopérantes des deux parties du corps de fiche.

Les pattes de contact flexibles sur le pourtour de la partie avant du corps de fiche ont une course de flexion suffisante pour que le contact mécanique et donc, électrique soit assuré avec la paroi intérieure de la cavité d'embase, même en cas de désalignement maximum. On peut d'ailleurs conférer un jeu important entre la paroi intérieure de la cavité d'embase et la périphérie de la partie avant du corps de fiche, ce qui implique que cette dernière peut se trouver excentrée lors de son logement dans la cavité d'embase. La partie avant du corps de fiche peut être recentrée vers le composant électronique avec lequel elle doit se connecter, grâce à une succession de chanfreins qui la recentre au fur et à mesure de son avancement dans la cavité d'embase.

Un avantage subséquent induit par le montage flottant entre partie avant et arrière du corps de fiche est que les éventuelles contraintes mécaniques appliquées sur la partie arrière de la fiche ne sont pas transmises à la partie avant et donc au composant électronique monté sur la carte de l'équipement électronique. Cela est avantageux car un tel composant est particulièrement vulnérable aux efforts mécaniques auxquels il est soumis, en raison de la tenue par brasage sur la surface du circuit imprimé de la carte qui n'est pas apte supporter des efforts importants.

Selon une variante de réalisation, le(s) contact(s) ou le(s) convertisseur(s) optoélectronique(s) peuvent faire saillie au-delà de la partie avant.

Avantageusement, la pluralité des pattes flexibles constitue un dispositif de protection contre les interférences électromagnétiques (EMI pour « ElectroMagnetic Interférence » en anglais) et/ou avantageusement également un parafoudre. Ainsi les pattes flexibles assurent une parfaite continuité de masse et/ou de blindage électromagnétique. La continuité de masse peut de préférence être assurée au moyen d'une tresse métallique fixée autour du câble sur lequel la fiche est montée et reliée au potentiel de la terre à son extrémité opposée.

Selon une variante de réalisation, les pattes flexibles peuvent être supportées par une bague en matériau conducteur électrique montée coulissante autour de la partie avant du corps de fiche.

Alternativement, on peut réaliser intégralement la pluralité des pattes flexibles avec la partie avant du corps, c'est-à-dire en une seule pièce.

A des fins de masse et/ou blindage électromagnétique, la partie avant et la bague éventuelle supportant les pattes flexibles peuvent être réalisées en métal, par exemple en aluminium ou zamak moulé sous pression, revêtu d'une protection anticorrosive ou encore en matière(s) plastique(s) avec métallisation.

Selon une variante avantageuse de réalisation, la fiche peut comprendre un joint d'étanchéité porté par la partie avant ou par la partie arrière du corps de fiche. Ce joint est adapté pour réaliser l'étanchéité à l'interface entre la fiche et l'embase dans laquelle la partie avant du corps de fiche est destinée à se loger. Avec un tel joint, on s'assure d'une parfaite étanchéité à l'interface entre fiche et embase. En outre, l'effort de verrouillage de la fiche sur l'embase peut être transmis efficacement et de manière uniforme au joint afin de le comprimer. De préférence, le joint d'étanchéité peut être porté par la bague supportant les pattes flexibles.

Selon une caractéristique avantageuse, la partie avant du corps de fiche comporte des moyens de maintien amovible de tout type de connecteur existant : il peut s'agir d'un convertisseur optoélectronique de type SFP/SFP+, ou d'une interface de type RJ45 intégrant un nombre de huit contact électriques, ou d'une interface à plusieurs contacts de puissance ou d'une interface de signal à plusieurs contacts de signaux ou d'un ou plusieurs contacts optiques. Ainsi, quelle que soit l'interface de signal qui est spécifique à partir du câble sur laquelle la fiche est montée, on peut s'assurer d'un bon alignement selon les trois directions x, y, z entre le composant électronique, l'embase et le ou les contacts de la fiche.

Plus particulièrement, la partie avant du corps de fiche peut comprendre une lame flexible adaptée pour exercer une pression d'appui contre un convertisseur optoélectronique de type SFP/SFP+ à l'intérieur de la partie avant de sorte à ce qu'un ou plusieurs pions de blocage sur la périphérie du convertisseur est(sont) maintenu(s) en butée par la lame flexible contre un épaulement à l'intérieur de la bague afin de maintenir le convertisseur en position bloquée dans la bague, un effort de poussée manuel sur le convertisseur permettant d'enlever le convertisseur de la partie avant. Le montage/démontage amovible du convertisseur optoélectronique à l'intérieur de la partie avant peut être ainsi aisément et rapidement réalisé, notamment en vue de son remplacement en cas de défaillance.

Selon un mode de réalisation avantageux, la fiche comprend un presse-étoupe avec un écrou destiné à se visser sur la partie arrière du corps de la fiche.

Selon ces deux modes, la fiche peut comprendre avantageusement une languette de blocage montée coulissante dans le levier de verrouillage entre une position de blocage dans laquelle elle est engagée à l'intérieur de l'écrou du presse-étoupe vissé sur la partie arrière, afin de bloquer le pivotement du levier de verrouillage lorsqu'il est dans sa position de verrouillage sur l'embase, et une position de déblocage dans laquelle elle est désengagée de l'intérieur de l'écrou afin de laisser libre le pivotement du levier de verrouillage lorsqu'il est dans sa position de verrouillage sur l'embase.

L'invention a également pour objet une fiche, destinée à être connectée à une embase comprenant :
- un levier de verrouillage à l'embase, le levier de verrouillage étant monté pivotant sur le corps de fiche, le levier comprenant deux crochets de verrouillage répartis de part et d'autre du corps de fiche et destinés à coopérer avec deux ergots de verrouillage répartis de part et d'autre de l'embase ;
- un presse-étoupe avec un écrou, destiné à se visser à l'arrière du corps de la fiche ;
- une languette de blocage montée coulissante dans le levier de verrouillage entre une position de blocage dans laquelle elle est engagée à l'intérieur de l'écrou du presse-étoupe vissé à l'arrière du corps de fiche, afin de bloquer le pivotement du levier de verrouillage lorsqu'il est dans sa position de verrouillage sur l'embase, et une position de déblocage dans laquelle elle est désengagée de l'intérieur de l'écrou afin de laisser libre le pivotement du levier de verrouillage lorsqu'il est dans sa position de verrouillage sur l'embase.

La languette de blocage selon l'invention permet d'éviter les pivotements accidentels du levier de verrouillage qui sont susceptibles de provoquer le déverrouillage non souhaité de la fiche de l'embase. En effet, la languette peut coulisser dans une rainure prévue à cet effet du levier de verrouillage, entre une position avancée vers la partie avant du corps de fiche et une position reculée de cette dernière. On peut y associer un effet d'encliquetage mécanique de la languette pour la maintenir dans sa position avancée ou reculée.

Lorsque l'utilisateur souhaite bloquer le levier dans sa position de verrouillage, il déplace alors la languette vers sa position reculée, ce qui provoque son insertion sous le rebord de l'écrou du presse-étoupe et par-là empêche tout pivotement du levier.

Pour sécuriser encore plus et de manière permanente le déverrouillage non souhaité, on peut prévoir avantageusement en lieu et place de ou en sus de la languette de blocage, de ménager une forme en creux dans le levier de verrouillage pour pouvoir y disposer un collier de serrage usuel, tel qu'un collier cranté en matière plastique. L'invention a encore pour objet un ensemble comprenant :
- au moins une fiche telle que décrite ci-avant;
- au moins une embase dans laquelle la partie avant du corps de fiche est logée lorsque le ou les contacts ou le convertisseur optoélectronique de la fiche est (sont) connecté(s) au(x) contact(s) supportés par une carte de circuit électronique d'un équipement électronique, l'embase comprenant deux ergots de verrouillage faisant saillie de part et d'autre de sa cavité vers l'extérieur,

l'embase et la fiche étant configurées de telle sorte que la fiche est verrouillée à l'embase au moyen du levier de verrouillage dans la position d'accrochage des crochets sur les ergots de verrouillage.

L'ensemble peut comprendre avantageusement :
- une pluralité de fiches telles que celle décrite précédemment ; et
- une pluralité d'embases moulée intégralement avec un panneau du boitier de l'équipement électronique adjacentes, comportant chacune une partie tubulaire creuse formant un rebord faisant saillie par rapport au panneau du côté de l'équipement opposé à celui duquel la carte de circuit électronique est agencée; chaque rebord portant deux ergots de verrouillage, les ergots de verrouillage étant continus entre les embases adjacentes ;

les embases et les fiches étant configurées de telle sorte que lorsque chaque fiche est connectée à une des embases et verrouillée à cette dernière au moyen du levier de verrouillage dans la position d'accrochage des crochets sur les ergots de verrouillage, les bras supportant deux crochets adjacents de deux leviers adjacents sont en appui plan ou ponctuel ou linéique l'un contre l'autre.

Pour la réalisation des embases en une seule pièce avec un panneau de boitier d'équipement électronique, on pourra se reporter plus amplement à la description de la demande de brevet déposée au nom de la demanderesse, le même jour que la présente, et qui est intitulée « *Système de connexion d'une pluralité de fiches à un ensemble monobloc d'un panneau de boitier d'équipement électronique et d'une pluralité d'embases de connecteurs*»*.*

Avec n'importe laquelle des interfaces connues comme par exemple des interfaces de type optique, SFP, RJ45, puissance, données, combiné, on peut obtenir un pas d'espacement entre deux embases adjacentes de l'ordre de 26mm.

Un avantage subséquent au fait que les fiches sont en appui plan, ponctuel ou linéique les unes contre les autres est d'augmenter la résistance mécanique de la connectique.

En effet, en cas d'effort de traction latéral appliqué à un cordon/câble relié à l'une des fiches, celle-ci vient en appui contre la fiche adjacente, qui apporte donc un contre-effort à l'effort latéral.

L'invention a également pour objet un procédé de connexion et de verrouillage d'une fiche décrite précédemment sur une embase d'un panneau de boitier d'équipement électronique, comprenant les étapes suivantes :
a/ logement de la partie avant de la fiche assemblée, dans l'embase, de sorte à mettre en contact les pattes flexibles avec la paroi intérieure d'embase et à connecter le ou les contacts du câble ou le ou les convertisseurs optoélectronique(s) de la fiche, avec le ou les contacts supportés par une carte de circuit imprimé de l'équipement électronique;
b/ pivotement du levier de verrouillage de la fiche de sorte à accrocher les ergots de verrouillage de l'embase par les crochets de verrouillage du levier.

De préférence, après l'étape b/, il peut être prévu une étape c/ de blocage du levier de verrouillage dans la position de verrouillage de la fiche à l'embase, par le déplacement en translation d'une languette de blocage.

Il peut être aussi envisagé en dehors du cadre de l'invention, un procédé de déconnexion et de déverrouillage d'une fiche décrite précédemment d'une embase d'un panneau de boitier d'équipement électronique, comprenant les étapes suivantes :
a/ pivotement du levier de verrouillage de la fiche de sorte à décrocher les crochets de verrouillage du levier, des ergots de verrouillage de l'embase ;
b/ enlèvement de la partie avant de la fiche assemblée de l'embase, de sorte à déconnecter le ou les contacts du câble ou le ou les convertisseurs optoélectronique(s) de la fiche, du ou des contacts supportés par une carte de circuit imprimé de l'équipement électronique, et à dégager les pattes flexibles de la cavité d'embase.

De préférence, avant l'étape a/, il peut être prévu une étape a/0 de déblocage du levier de verrouillage dans la position de verrouillage de la fiche à l'embase, par le déplacement en translation d'une languette de blocage.

Il peut être aussi envisagé en dehors du cadre de l'invention, un procédé d'enlèvement d'un convertisseur optoélectronique, notamment un convertisseur optoélectronique SFP/SFP de la partie avant d'une fiche décrite précédemment, montée sur au moins un câble optique, comprenant les étapes suivantes :
a/ démontage de la partie avant de la partie arrière du corps de fiche,
b/ déconnexion entre les contacts optiques supportées par le câble optique et le convertisseur,
c/ poussée manuelle sur le convertisseur tout en maintenant la partie avant de sorte à réaliser le déblocage de pion(s) en périphérie du convertisseur de leur position de butée contre un épaulement à l'intérieur de la partie avant.

La connexion électrique de la partie avant permet une mise à la masse préliminaire avant de connecter les composants de l'équipement, et inversement de garantir une déconnexion de contacts électriques avant l'enlèvement de la masse.

Ainsi, on sécurise toutes les opérations pour éviter les décharges de courant électrostatique susceptibles d'endommager les composants électroniques de l'équipement.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue en perspective d'un premier exemple de fiche selon l'invention, la fiche intégrant un convertisseur optoélectronique de type « transceiver SFP » qui fait saillie à l'avant de la fiche;
- la figure 2 est une vue en éclaté de la fiche selon la figure 1 ;
- la figure 3 est une vue en coupe longitudinale partielle de la fiche selon les figures 1 et 2;
- la figure 3A est une vue de détail du dessus de la fiche selon l'une des figures 1 à 3 montrant le montage flottant de la partie arrière du corps de fiche autour de sa partie avant;
- la figure 4 est une vue en perspective d'un deuxième exemple de fiche selon l'invention, la fiche intégrant un connecteur de type RJ45 qui fait saillie à l'avant de la fiche;
- la figure 5 est une vue en éclaté de la fiche selon la figure 4 ;
- la figure 6 est une vue en coupe longitudinale partielle de la fiche selon les figures 4 et 5;
- la figure 6A est une vue de détail du dessus de la fiche selon l'une des figures 4 à 6 montrant le montage flottant de la partie arrière du corps de fiche autour de sa partie avant;
- les figures 7A à 7C montrent en vue en perspective les différentes étapes de connexion et de verrouillage d'une fiche selon l'invention à une embase d'un panneau de boitier d'équipement électronique ;
- les figures 8A et 8B montrent en vue en perspective les différentes étapes de déconnexion et de déverrouillage d'une fiche selon l'invention connectée et verrouillée à une embase d'un panneau de boitier d'équipement électronique ;
- les figures 8C à 8F montrent en vue en perspective les différentes étapes de démontage d'une fiche selon l'invention aboutissant à un enlèvement du convertisseur optoélectronique de la partie avant du corps de fiche ;
- la figure 9 est une vue en coupe longitudinale partielle d'une fiche selon le premier exemple des figures 1 à 3A telle qu'elle en configuration connectée et verrouillée à une embase d'un panneau de boitier d'équipement électronique, le convertisseur optoélectronique de la fiche étant connecté au contact du composant électronique monté en surface de carte de circuit imprimée de l'équipement électronique;
- les figures 10A et 10B sont des vues de détail en coupe longitudinales montrant respectivement la position de déblocage et la position de blocage d'un levier de verrouillage d'une fiche à une embase selon un aspect de l'invention ;
- les figures 11A et 11B ont des vues en perspective respectivement de devant et de derrière d'un bouchon adapté pour obturer et être verrouillé à une embase en lieu et place d'une fiche selon l'invention ;
- la figure 12 est une vue en perspective d'un équipement électronique et d'une fiche connectée à une embase d'un panneau du boitier de l'équipement, selon une configuration de l'état de l'art.

La figure 12 relative à l'état de l'art a déjà été commentée en détail en préambule. Elle ne l'est donc pas ci-après.

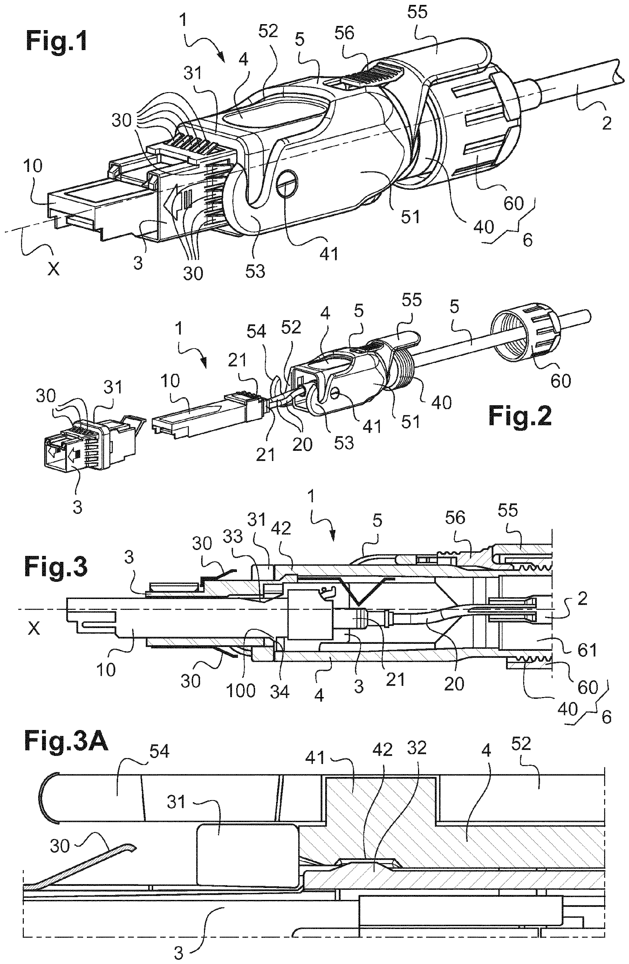

Par souci de clarté, les mêmes références désignant les mêmes éléments d'une fiche, embase, équipement électronique selon l'état de l'art et selon l'invention sont utilisées pour toutes les figures 1 à 12.

On précise que les termes « avant » et « arrière» se réfèrent à une fiche selon l'invention. Ainsi, la partie avant du corps de fiche est celle située du côté de l'interface avec l'embase, tandis que la partie arrière est celle située du côté par lequel le câble/cordon est logé et retenu dans la fiche. La partie arrière peut aussi être le coté de communication sans fil de type wifi ou Bluetooth 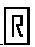 par exemple pour des fiches intégrant clés non câblées.

On a représenté sur les figures 1 à 3A, une fiche désignée globalement par 1 selon un premier exemple de mise en œuvre de l'invention.

Cette fiche 1 est destinée à être connectée à une embase 7 moulée intégralement avec un panneau 80 d'un boitier d'équipement électronique 8 configuré pour recevoir une pluralité de signaux optique, électrique, de puissance, de données, ou toute combinaison de ces signaux. La configuration de connexion est illustrée en figure 9 et sera détaillée par la suite.

Cette fiche 1 peut être configurée pour être montée sur un unique câble 2 qui peut ne comporter que des conducteurs optiques 21.

La fiche 1 comporte un corps qui s'étend selon un axe longitudinal rectiligne X.

Conformément à l'invention, le corps est réalisé en deux pièces 3, 4, dont l'une constitue la partie avant 3 sous la forme générale d'une bague et l'autre, la partie arrière 4.

Un convertisseur optoélectronique 10, encore appelé *transceiver* en anglais, peut être fixé de manière amovible et interchangeable à l'intérieur d'un logement de la partie avant 3 du corps 60 prévu à cet effet. Le *transceiver* 10 fait saillie au-delà de la partie avant 3 du corps de fiche.

Dans l'exemple illustré, le convertisseur optoélectronique 10 est au contact de la partie avant 3 du corps de la fiche 1, de telle sorte que le boîtier de ce convertisseur optoélectronique 10 est au même potentiel électrique que cette partie avant 3.

Un ou plusieurs contacts optiques 21 peuvent être reliés à une extrémité à un conducteur optique 20, notamment une fibre optique, du câble 2 et être connectés à leur autre extrémité à une entrée du *transceiver* 10. Les contacts optiques 21 sont par exemple des contacts de type LC et le convertisseur optoélectronique 10 est par exemple un transceiver de type SFP.

Selon une variante avantageuse illustrée en figures 2 et 3, une lame flexible 33 réalisée intégralement à l'intérieur de la bague 3 (partie avant) est prévue pour maintenir avec pression le convertisseur optoélectronique 10 à l'intérieur de la partie avant 3. Pour ce faire, le convertisseur 10 est pourvu d'un ou plusieurs pions de blocage 100 sur sa périphérie. Ainsi, le convertisseur 10 est maintenu en position bloquée dans la bague 3 grâce au(x) pion(s) de blocage 100 qui sont maintenus en butée par la lame flexible 33 contre un épaulement 34 à l'intérieur de la bague 3. Un simple effort de poussée manuel sur le convertisseur 10 vers le haut permettant d'enlever aisément le convertisseur 10 de la partie avant 3.

Dans l'exemple illustré en figures 1 à 3A, deux contacts optiques identiques de type LC sont connectés chacun à un conducteur optique 20 du câble optique 2.

Conformément à l'invention, une pluralité de pattes flexibles 30 en matériau conducteur électrique, est réalisée intégralement avec la partie avant 3 du corps en étant réparties à la périphérie extérieure de cette partie avant 3.

Ces pattes flexibles 30 sont adaptées pour rester en contact mécanique avec l'intérieur de l'embase 7, lorsque la partie avant 3 du corps est logée dans cette dernière.

La partie avant 3 du corps de fiche peut être réalisée par exemple en aluminium ou zamak moulé sous pression, revêtu d'une protection anticorrosive, ou encore en matière(s) plastique(s), avec métallisation.

Un joint d'étanchéité 31 peut avantageusement être porté par la partie avant 3. Ce joint 31 permet de réaliser l'étanchéité à l'interface entre la fiche 1 et l'embase 7 dans laquelle la partie avant du corps de fiche est destinée à se loger lors de la connexion.

La partie arrière 4 quant à elle forme un fourreau, conformé pour loger l'extrémité du câble 2 supportant elle-même les contacts 21.

La partie arrière 4 peut être réalisée par exemple en matière plastique.

Selon l'invention, la partie arrière 4 est montée flottante autour de la partie avant 3.

Une variante avantageuse pour réaliser un tel montage flottant est visible en figure 3A : deux protubérances 32 réparties de part et d'autre de la partie avant 3 sont chacune montée avec un ajustement libre dans une gorge 42 ménagée à cet effet sur un côté de la partie arrière 4 le long duquel un crochet de verrouillage 53, 54 peut pivoter.

Avec le montage flottant entre partie avant 3 et partie arrière 4 du corps de fiche 1, la partie avant 3 peut rester désaxée dans la cavité d'embase 7 même si la partie arrière 4 du corps tend à se réaligner avec cette dernière, en particulier lors d'un verrouillage au moyen d'un levier 5 explicité ci-après.

En outre, la présence des pattes flexibles 30 assure à coup sûr la continuité de contact entre partie avant 3 et embase 7, même en cas de désalignement maximum entre la partie avant 3 et le composant électronique 81 supportée par la carte électronique 82 de l'équipement électronique 8 auquel la fiche 1 est connectée.

Comme illustré en figure 1 à 3A, un levier de verrouillage 5 à deux bras 51, 52 est monté pivotant autour d'un axe 41 sur la partie arrière 4 du corps de la fiche. L'axe de pivotement 41 peut être moulé intégralement avec la partie arrière 41.

L'extrémité libre de chaque bras 51, 52 comporte un crochet de verrouillage 53,54.

Le levier 5 peut être conformé avec une partie de préhension 55 qui permet de réaliser manuellement, de manière aisée, le pivotement du levier 5 autour de l'axe 41.

La fiche 1 comporte encore dans l'exemple décrit un presse-étoupe 6 de rétention du câble 2. Le presse-étoupe comprend un écrou 60, par exemple réalisé en matière plastique, destiné à se visser sur la partie arrière 4 du corps de la fiche 2 et comprimer un joint d'étanchéité 61.

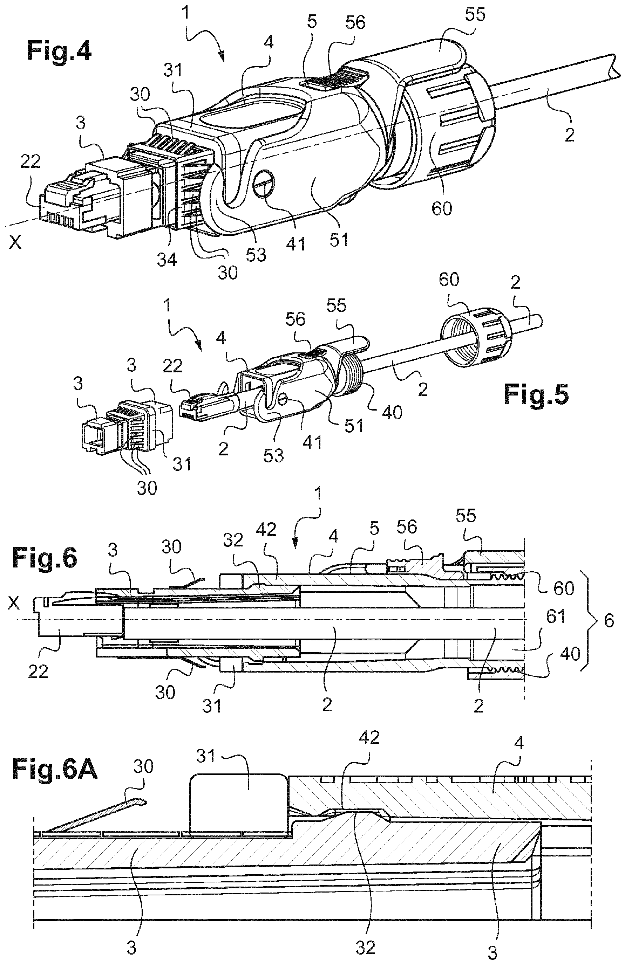

Un autre exemple de mise en œuvre est montré aux figures 4 à 6A, dans lequel la fiche 1 comprend les mêmes éléments que ceux décrits en relation avec la fiche selon les figures 1 à 3A, à ceci près qu'ici le câble 2 est un câble de type RJ 45 et que le connecteur 22 à l'extrémité libre dudit câble 2 est directement logé et maintenu dans la partie avant 3.

Le montage flottant entre partie avant 3 logeant avec maintien le connecteur 22 et la partie arrière 4 est visible en figure 6A : ici, les deux protubérances 32 sont réparties sur le dessus et sur le dessous de la partie avant 3 montée avec un ajustement libre dans une gorge 42 ménagée à cet effet sur un côté de la partie arrière 4 transversal à celui le long duquel un crochet de verrouillage 53, 54 pivote.

De manière générale, la fiche 2 selon l'invention peut intégrer tout type de contacts/connecteurs connus dans sa partie avant, en particulier de type optique ou électrique, de données, de puissance ou toute combinaison de ceux-ci...

On décrit maintenant les opérations de connexion et de verrouillage d'une fiche 1 assemblée selon l'une des figures 1 à 3A à une embase 7.

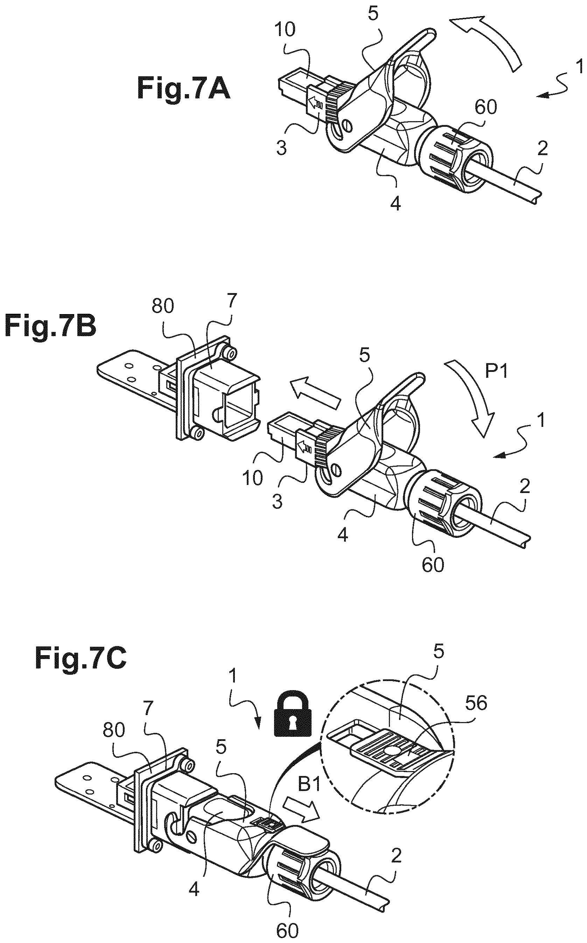

L'embase 7 est avantageusement moulée intégralement avec un panneau 80 d'un boitier d'un équipement électronique 8.
Etape a/ : l'utilisateur amène la fiche 1 assemblée en regard de l'embase puis vient loger la partie avant 3 dans l'embase 7, de sorte à mettre en contact les pattes flexibles 30 avec la paroi intérieure d'embase 7 et à connecter le convertisseur 10 avec les contacts 82 d'un composant électronique 83 supporté par une carte de circuit imprimé 84 de l'équipement électronique 8 (figures 7A, 7B).
Etape b/ : l'utilisateur fait ensuite pivoter le levier de verrouillage 5 de la fiche de sorte à accrocher les ergots de verrouillage 71, 72 de l'embase 7 par les crochets de verrouillage 53, 54 du levier (figure 7C, pivotement du levier 5 selon la flèche P1 de la figure 7B). Le verrouillage de la fiche 1 à l'embase 7 est alors effectué.
Etape c/ : puis l'utilisateur vient bloquer le levier de verrouillage dans la position de verrouillage de la fiche 1 à l'embase 7, par coulissement d'une languette de blocage 56 vers l'arrière de la fiche 1 (figure 7C, déplacement de la languette 56 selon la flèche B1). Le coulissement de la languette de blocage 56 provoque son déplacement de sa position de déblocage, à sa position de blocage dans laquelle elle est insérée entre l'intérieur de l'écrou 60 et la partie arrière 4 du corps de fiche.

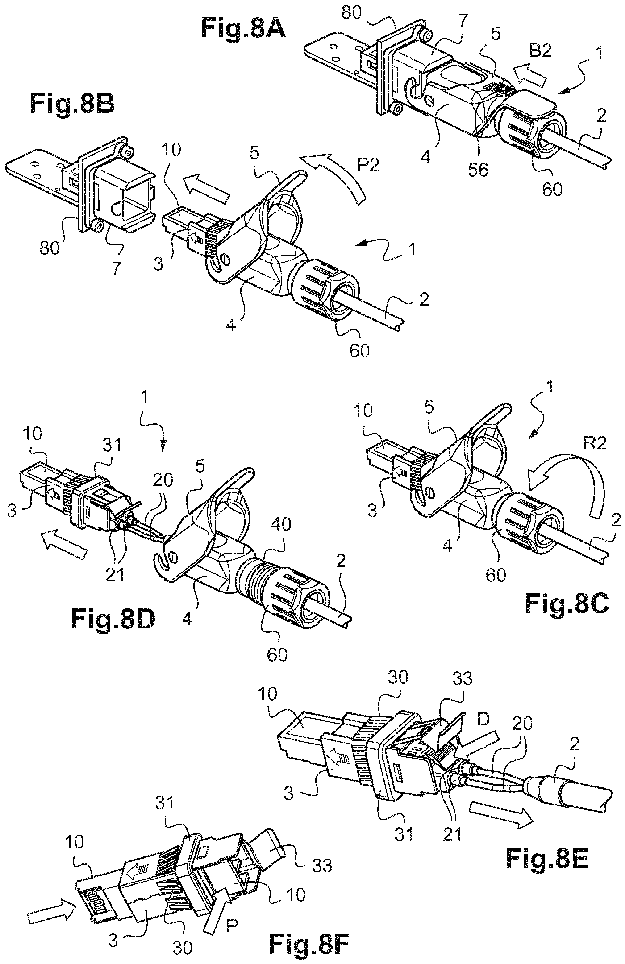

Les opérations de connexion et de verrouillage de la fiche 1 de l'embase 7 sont réalisées dans l'ordre inverse, comme décrit en référence aux figures 8A et 8B.
Etape a0/ : l'utilisateur déplace la languette de blocage dans le sens inverse à celui décrit pour le blocage (figure 8A, déplacement de la languette 56 selon la flèche B2).
Etape a/ : il vient ensuite faire pivoter le levier de verrouillage 5 de la fiche de sorte à décrocher les crochets de verrouillage 53, 54, des ergots de verrouillage 71, 72 de l'embase 7 (figure 8B, pivotement du levier 5 selon la flèche P2).
Les opérations de démontage du convertisseur optoélectronique 10 de la fiche 1 en vue notamment de son inspection et/ou de son remplacement sont réalisées, comme décrit en référence aux figures 8C à et 8F.
Etape a/ : l'utilisateur vient alors dévisser l'écrou du presse-étoupe (figure 8C, dévissage selon flèche R2) puis il démonte la partie arrière 4 de la partie avant 3 (figure 8D).
Etape b/ : il déconnecte alors les deux contacts 21 du convertisseur 10 de la fiche 1. Pour cela il appuie sur les pattes 23 de déconnexion des contacts 21 (figure 8E, appui selon la flèche D).
Etape c/ : il peut alors procéder à l'enlèvement du convertisseur optoélectronique(s) 10 de la partie avant 3. Pour cela, si le pion 100 du convertisseur n'est pas un pion escamotable, l'utilisateur vient pousser manuellement sur le convertisseur 10 vers le haut à l'arrière (figure 8E, flèche P) tout en poussant sur l'avant du convertisseur 10 en maintenant la partie avant de sorte à réaliser le déblocage de pion(s) 100 en périphérie du convertisseur de leur position de butée contre l'épaulement 31 à l'intérieur de la partie avant 3.

Comme cela ressort de la description qui précède, les opérations de connexion/déconnexion, verrouillage/déverrouillage de la fiche 1 à l'embase 7 ainsi que les opérations de réalisation/d'enlèvement du presse-étoupe 6 sur le câble 2 sont aisées et rapides pour un utilisateur même non expérimenté.

La figure 9 illustre la fiche 1 de l'invention selon les figures 1 à 3 en configuration de connexion et de verrouillage à une embase 7 d'un panneau 80 d'équipement électronique 8 dont le composant électronique 82 aux contacts 83 connectés au convertisseur 10 est porté par la carte imprimé 81.

Sur cette figure 9, on voit en outre que l'embase comporte des lèvres 73 qui tendent à bien protéger mécaniquement le joint d'étanchéité 31. Ainsi, celui-ci est moins exposé directement à la lumière UV et aux intempéries.

Pour bloquer le pivotement du levier de verrouillage 5 de la fiche 1 dans sa position de verrouillage à une embase 7, on fait coulisser la languette de blocage 56 qui est insérée dans une rainure du levier 5, de sa position de déblocage, à distance de l'écrou 60 (figure 10A), à sa position de blocage dans laquelle elle est insérée entre l'intérieur de l'écrou 60 et la partie arrière 4 du corps de fiche.

Selon l'invention, un bouchon 9 d'étanchéité et de blindage électromagnétique peut venir se connecter et être verrouillé dans une embase 7 en lieu et place d'une fiche 1 selon l'invention.

Un tel bouchon 9 est montré aux figures 11A et 11B :il comprend un corps 90 en matière plastique autour duquel est montée une bague de blindage 91 comportant le même type de pattes flexibles 92 que celles rapportées de la partie avant 3 de la fiche 1.

Ces pattes flexibles 92 ont ainsi une flexibilité suffisante pour être en contact avec la paroi intérieure de l'embase 7 lorsque le bouchon 9 est logé dans sa cavité.

En outre, un levier de verrouillage 93 à deux branches de verrouillages 94, 95 supportant chacun un crochet de verrouillage 96, 97 est monté pivotant sur le corps 90 du bouchon 9.

Enfin, un joint d'étanchéité 98 est monté autour du corps 90.

Ainsi, le corps 90 du bouchon 9 peut être logé à l'intérieur de l'embase 7, les pattes flexibles 92 maintenant le contact avec la paroi intérieure de l'embase et assurent ainsi une continuité de masse ou de blindage électromagnétique. Dans cette configuration, le levier de verrouillage 93 peut être pivoté de sorte à ce que ces crochets 96, 97 viennent s'accrocher autour des ergots de verrouillage 91, 92 de l'embase 7.

Le pivotement du levier 93 jusqu'à la position de verrouillage provoque la mise en compression du joint d'étanchéité 98.

Les fiches selon l'invention et des embases auxquelles elles peuvent être connectées peuvent être configurées pour fonctionner à des températures comprise entre -40°C et +125°C.

En termes d'étanchéité, les fiches selon l'invention et/ou les embases peuvent satisfaire la norme IP65, IP 67, IP68, ou UL50E.

La fiche 1 selon l'invention qui vient d'être décrite peut loger et maintenir dans sa partie avant 3, n'importe quel connecteur connu.

## Revendications

1. Fiche (1), destinée à être montée sur au moins un câble (2) dont une extrémité supporte un ou plusieurs contacts (21, 22), comprenant :
- un corps comprenant :
• une partie avant (3) en matériau conducteur électrique et qui s'étend selon un axe longitudinal (X), la partie avant étant conformée pour venir se loger dans une embase (7), la partie avant étant adaptée pour loger et maintenir le ou les contacts (22) du câble ou au moins un convertisseur optoélectronique (10) connecté au(x) contact(s) (21) du câble;
• une partie arrière (4) formant un fourreau, conformée pour loger l'extrémité du câble supportant elle-même le(s) contact(s) ; la partie arrière (4) étant montée flottante sur la partie avant (3);
- une pluralité de pattes flexibles (30) en matériau conducteur électrique, réparties à la périphérie extérieure de la partie avant (3), les pattes flexibles étant adaptées pour rester en contact mécanique avec l'intérieur de l'embase lorsque la partie avant du corps est logée dans cette dernière; la fiche étant **caractérisée en ce qu'**elle comprend en outre:
- un levier de verrouillage (5) à une embase (7), le levier de verrouillage étant monté pivotant sur la partie arrière (4) du corps de fiche, le levier comprenant deux crochets de verrouillage (53, 54) répartis de part et d'autre de la partie arrière et destinés à coopérer avec deux ergots de verrouillage (71, 72) répartis de part et d'autre de l'embase;
et **en ce que** le montage flottant de la partie arrière sur la partie avant du corps de la fiche, permet à cette partie avant de rester désaxée dans la cavité d'embase, même si la partie arrière du corps tend quant à elle à se réaligner avec ladite cavité, en particulier lors d'un verrouillage de la fiche sur l'embase au moyen du levier de verrouillage.

2. Fiche (1) selon la revendication 1, la pluralité des pattes flexibles (30), constituant un dispositif de protection contre les interférences électromagnétiques et/ou un dispositif de protection parafoudre.

3. Fiche (1) selon l'une des revendications précédentes, comprenant une bague (34) en matériau conducteur électrique, montée coulissante autour de la partie avant (3) du corps, la bague supportant les pattes flexibles (30).

4. Fiche (1) selon la revendication 1 ou 2, la pluralité des pattes flexibles (30) étant réalisée intégralement avec la partie avant du corps.

5. Fiche (1) selon l'une des revendications précédentes, comprenant un joint d'étanchéité (31) porté par la partie avant (3) ou par la partie arrière (4) du corps de fiche.

6. Fiche (1) selon l'une des revendications précédentes, la partie avant comportant des moyens de maintien amovible d'un convertisseur optoélectronique de type SFP/SFP+, ou une interface de type RJ45 ou une interface de puissance ou de signal d'un ou plusieurs contacts optiques.

7. Fiche (1) selon l'une des revendications précédentes, la partie avant (3) comprenant une lame flexible (33) adaptée pour venir exercer une pression d'appui contre un convertisseur optoélectronique (10) de type SFP/SFP+ à l'intérieur de la partie avant, de sorte à ce qu'un ou plusieurs pions de blocage (100) sur la périphérie du convertisseur (10) est(sont) maintenu(s) en butée par la lame flexible (33) contre un épaulement (34) à l'intérieur de la bague (3) afin de maintenir le convertisseur (10) en position bloquée dans la bague (3), un effort de poussée manuel sur le convertisseur permettant de l'enlever de la partie avant.

8. Fiche (1) selon l'une des revendications précédentes, comprenant un presse-étoupe (6) avec un écrou (60) destiné à se visser sur la partie arrière (4) du corps de la fiche.

9. Fiche (1) selon la revendication 8, comprenant une languette de blocage (56) montée coulissante dans le levier de verrouillage (6) entre une position de blocage dans laquelle elle est engagée à l'intérieur de l'écrou (60) du presse-étoupe vissé sur la partie arrière (4), afin de bloquer le pivotement du levier de verrouillage lorsqu'il est dans sa position de verrouillage sur l'embase, et une position de déblocage dans laquelle elle est désengagée de l'intérieur de l'écrou afin de laisser libre le pivotement du levier de verrouillage, lorsqu'il est dans sa position de verrouillage sur l'embase.

10. Ensemble comprenant :
- au moins une fiche (1) selon l'une des revendications 1 à 9;
- au moins une embase (7) dans laquelle la partie avant (3) du corps de fiche est logée lorsque le ou les contacts ou le convertisseur optoélectronique de la fiche est (sont) connecté(s) au(x) contact(s) supportés par une carte de circuit électronique d'un équipement électronique, l'embase comprenant deux ergots de verrouillage (71, 72) faisant saillie de part et d'autre de sa cavité vers l'extérieur,
l'embase (7) et la fiche (1) étant configurées de telle sorte que la fiche (1) est verrouillée à l'embase au moyen du levier de verrouillage dans la position d'accrochage des crochets (53, 54) sur les ergots de verrouillage (71, 72).

11. Ensemble selon la revendication 10, comprenant :
- une pluralité de fiches (1) selon l'une des revendications 1 à 9; et
- une pluralité d'embases moulée intégralement avec un panneau du boitier de l'équipement électronique adjacentes, comportant chacune une partie tubulaire creuse formant un rebord faisant saillie par rapport au panneau du côté de l'équipement opposé à celui duquel la carte de circuit électronique est agencée; chaque rebord (70) portant deux ergots de verrouillage (71, 72), les ergots de verrouillage étant continus entre les embases adjacentes ;
les embases (7) et les fiches (1) étant configurées de telle sorte que lorsque chaque fiche (1) est connectée à une des embases et verrouillée à cette dernière au moyen du levier de verrouillage dans la position d'accrochage des crochets sur les ergots de verrouillage, les bras supportant deux crochets adjacents de deux leviers adjacents sont en appui plan ou ponctuel ou linéique, l'un contre l'autre.

12. Procédé de connexion et de verrouillage d'une fiche (1) selon l'une des revendications 1 à 9 sur une embase (7) d'un panneau (80) de boitier d'équipement électronique (8), comprenant les étapes suivantes :
a/ logement de la partie avant (3) de la fiche (1) assemblée, dans l'embase, de sorte à mettre en contact les pattes flexibles avec la paroi intérieure d'embase et à connecter le ou les contacts (22) du câble (2) ou le ou les convertisseurs optoélectronique(s) (10) de la fiche, avec le ou les contacts supportés par une carte de circuit imprimé de l'équipement électronique;
b/ pivotement du levier de verrouillage de la fiche de sorte à accrocher les ergots de verrouillage de l'embase par les crochets de verrouillage du levier.

13. Procédé selon la revendication 12, comprenant après l'étape b/, une étape c/ de blocage du levier de verrouillage dans la position de verrouillage de la fiche à l'embase, par le déplacement en translation d'une languette de blocage (56).

## Patentansprüche

1. Stecker (1), der dazu bestimmt ist, an mindestens einem Kabel (2) angebracht zu werden, von dem ein Ende mehrere Kontakte (21, 22) trägt, und der Folgendes aufweist:
- einen Körper, der Folgendes aufweist:
• einen vorderen Teil (3) aus elektrisch leitendem Material, der sich entlang einer Längsachse (X) erstreckt, wobei der vordere Teil so angepasst ist, dass er in einem Sockel (7) untergebracht werden kann, wobei der vordere Teil ausgebildet ist, den oder die Kontakte (22) des Kabels oder mindestens einen optoelektronischen Wandler (10), der an den/die Kontakt(e) (21) des Kabels angeschlossen ist, unterzubringen und zu halten;
• einen hinteren Teil (4), der einen Mantel bildet, der ausgebildet ist, das Ende des Kabels unterzubringen, das den/die Kontakt(e) trägt; wobei der hintere Teil (4) schwimmend am vorderen Teil (3) angebracht ist;
- eine Vielzahl flexibler Zungen (30) aus elektrisch leitendem Material, die am Außenumfang des vorderen Teils (3) verteilt sind, wobei die flexiblen Zungen ausgebildet sind, um in mechanischem Kontakt mit dem Inneren des Sockels zu bleiben, wenn der vordere Teil des Körpers in diesem Letzteren untergebracht ist; wobei der Stecker **dadurch gekennzeichnet ist, dass** er darüber hinaus Folgendes aufweist:
- einen Verriegelungshebel (5) an einem Sockel (7), wobei der Verriegelungshebel schwenkbar am hinteren Teil (4) des Steckerkörpers angebracht ist, wobei der Hebel zwei auf beiden Seiten des hinteren Teils verteilte Verriegelungshaken (53, 54) aufweist, die dazu dienen, mit zwei Verriegelungsnasen (71, 72) zusammenzuarbeiten, die sich auf beiden Seiten des Sockels befinden;
und dadurch, dass die schwimmende Anbringung des hinteren Teils am vorderen Teil des Steckerkörpers diesem vorderen Teil ermöglicht, axial verschoben in dem Hohlraum des Sockels zu bleiben, selbst wenn der hintere Teil des Körpers dazu neigt, sich mit dem Hohlraum neu auszurichten, insbesondere bei einer Verriegelung des Steckers am Sockel mithilfe des Verriegelungshebels.

2. Stecker (1) nach Anspruch 1, wobei die Vielzahl der flexiblen Zungen (30) eine Vorrichtung zum Schutz gegen elektromagnetische Störungen und/oder eine Blitzschutzvorrichtung bilden.

3. Stecker (1) nach einem der vorausgehenden Ansprüche, der einen Ring (34) aus elektrisch leitendem Material aufweist, der gleitend um den vorderen Teil (3) des Körpers montiert ist, wobei der Ring die flexiblen Zungen (30) trägt.

4. Stecker (1) nach Anspruch 1 oder 2, wobei die Vielzahl der flexiblen Zungen (30) einstückig mit dem vorderen Teil des Körpers ausgebildet sind.

5. Stecker (1) nach einem der vorausgehenden Ansprüche, der eine Dichtung (31) aufweist, die vom vorderen Teil (3) oder vom hinteren Teil (4) des Steckerkörpers getragen wird.

6. Stecker (1) nach einem der vorausgehenden Ansprüche, wobei der vordere Teil Mittel zum abnehmbaren Halten eines optoelektronischen Wandlers vom Typ SFP/SFP+ oder einer Schnittstelle vom Typ RJ45 oder einer Strom- oder Signalschnittstelle von einem oder mehreren optischen Kontakten aufweist.

7. Stecker (1) nach einem der vorausgehenden Ansprüche, wobei der vordere Teil (3) ein flexibles Blatt (33) aufweist, das ausgebildet ist, einen Pressdruck so gegen einen optoelektronischen Wandler (10) vom Typ SFP/SFP+ im Inneren des vorderen Teils auszuüben, dass ein oder mehrere Blockierstifte (100) am Umfang des Wandlers (10) von dem flexiblen Blatt (33) gegen eine Schulter (34) im Inneren des Rings (3) gehalten werden, um den Wandler (10) in blockierter Position in dem Ring (3) zu halten, wobei eine manuelle Druckkraft auf den Wandler ermöglicht, ihn vom vorderen Teil abzuheben.

8. Stecker (1) nach einem der vorausgehenden Ansprüche, der eine Kabelverschraubung (6) mit einer Mutter (60) aufweist, die zum Aufschrauben auf den hinteren Teil (4) des Steckerkörpers bestimmt ist.

9. Stecker (1) nach Anspruch 8, der eine Blockierzunge (56) aufweist, die gleitend in dem Verriegelungshebel (6) zwischen einer Blockierposition angebracht ist, in der sie in die Mutter (60) der Kabelverschraubung eingreift, die auf den hinteren Teil (4) geschraubt ist, um das Schwenken des Verriegelungshebels zu blockieren, wenn er sich in seiner Verriegelungsposition auf dem Sockel befindet, und einer Freigabeposition, in der sie von dem Inneren der Mutter gelöst ist, um das Schwenken des Verriegelungshebels zu ermöglichen, wenn er sich in seiner Verriegelungsposition auf dem Sockel befindet.

10. Baugruppe, die Folgendes aufweist:
- mindestens einen Stecker (1) nach einem der Ansprüche 1 bis 9;
- mindestens einen Sockel (7), in dem der vordere Teil (3) des Steckerkörpers untergebracht ist, wenn der oder die Kontakte oder der optoelektronische Wandler des Steckers mit einem oder mehreren Kontakten, die von einer elektronischen Leiterplatte eines elektronischen Geräts getragen werden, verbunden werden, wobei der Sockel zwei Verriegelungsnasen (71, 72) aufweist, die auf beiden Seiten seines Hohlraums nach außen ragen,
wobei der Sockel (7) und der Stecker (1) so ausgebildet sind, dass der Stecker (1) am Sockel mithilfe des Verriegelungshebels in der Rastposition der Haken (53, 54) auf den Verriegelungsnasen (71, 72) verriegelt ist.

11. Baugruppe nach Anspruch 10, die Folgendes aufweist:
- eine Vielzahl von Steckern (1) nach einem der Ansprüche 1 bis 9; und
- eine Vielzahl von Sockeln, die einstückig mit einer Platte des Gehäuses des benachbarten elektronischen Geräts vergossen sind, wobei jeder einen hohlen rohrförmigen Teil aufweist, der eine Stoßkante bildet, die in Bezug auf die Platte auf der Seite des Geräts hervorsteht, die der Seite gegenüberliegt, an der die elektronische Leiterplatte angeordnet ist; wobei jede Stoßkante (70) zwei Verriegelungsnasen (71, 72) trägt und die Verriegelungsnasen zwischen den benachbarten Sockeln durchgehend sind;
wobei die Sockel (7) und die Stecker (1) so ausgebildet sind, dass wenn jeder Stecker (1) mit einem der Sockel verbunden und mit diesem mithilfe des Verriegelungshebels in der Rastposition der Haken auf den Verriegelungsnasen verriegelt wird, die Arme, die zwei benachbarte Haken von zwei benachbarten Hebeln tragen, eben oder punktuell oder linear gegeneinanderdrücken.

12. Verfahren zum Verbinden und Verriegeln eines Steckers (1) nach einem der Ansprüche 1 bis 9 auf einem Sockel (7) einer Platte (80) eines Gehäuses eines elektronischen Geräts (8), das die folgenden Schritte aufweist:
a/ Unterbringen des vorderen Teils (3) des zusammengesetzten Steckers (1) in dem Sockel in der Art, dass die flexiblen Zungen mit der Innenwand des Sockels in Kontakt gebracht werden und dass der oder die Kontakt(e) (22) des Kabels (2) oder der oder die optoelektronische(n) Wandler (10) des Steckers mit dem oder den Kontakt(en), die von einer elektronischen Leiterplatte eines elektronischen Geräts getragen werden, verbunden werden;
b/ Schwenken des Verriegelungshebels Steckers in der Art, dass die Verriegelungsnasen des Sockels von den Verriegelungshaken des Hebels eingehakt werden.

13. Verfahren nach Anspruch 12, das nach dem Schritt b/ einen Schritt c/ zum Blockieren des Verriegelungshebels in der Position zum Verriegeln des Steckers am Sockel durch translatorische Verschiebung einer Verriegelungszunge (56) aufweist.

## Claims

1. Plug (1) intended to be mounted on at least one cable (2) whose one end supports one or more contacts (21, 22), comprising:
- a body, comprising:
• a front portion (3) made of electrically conductive material and extending along a longitudinal axis (X), the front portion being designed to be lodged in a socket (7), the front portion being adapted to lodge and hold the contact or contacts (22) of the cable or at least an optoelectronic converter (10) connected to the contact(s) (21) of the cable;
• a rear portion (4) forming a sheath, designed to lodge the end of the cable, itself supporting the contact(s); the rear portion (4) being mounted floating about the front portion (3);
the plug being **characterized in that** it comprises further:
- a plurality of flexible tabs (30) made of electrically conductive material, distributed on the outer periphery of the front portion (3), the flexible tabs being adapted to remain in mechanical contact with the interior of the socket when the front portion of the body is lodged in the latter;
- a lever (5) for locking to a socket (7), the locking lever being mounted pivoting on the rear portion (4) of the plug body, the lever comprising two locking hooks (53, 54) distributed on either side of the rear portion and designed to cooperate with two locking lugs distributed on either side of the socket.
and **in that** the floating mount of the rear portion on the front portion of the plug body allows this front portion to remain off axis in the socket cavity, even if the rear portion of the body for its part tends to realign itself with said cavity, in particular during the locking of the plug to the socket with the means of the locking lever.

2. Plug (1) according to Claim 1, the plurality of flexible tabs (30) constituting a device for protection against electromagnetic interference (EMI) and/or a lightning arrester protection device.

3. Plug (1) according to one Claim 1, comprising a ring (34) of electrically conductive material mounted in sliding manner about the front portion (3) of the body, the ring supporting the flexible tabs (30).

4. Plug (1) according to Claim 1, the plurality of flexible tabs (30) being integrated with the front portion of the body.

5. Plug (1) according to Claim 1, comprising a seal (31) carried by the front portion (3) or by the rear portion (4) of the plug body.

6. Plug (1) according to Claim 1, the front portion comprising means of removable holding of an optoelectronic converter of type SFP/SFP+, or an interface of type RJ45 or a power or signal interface of one or more optical contacts.

7. Plug (1) according to Claim 1, the front portion (3) comprising a flexible blade (33) adapted to come to exert a bearing pressure against an optoelectronic converter (10) of type SFP/SFP+ inside the front portion, so that one or more locking pins (100) on the periphery of the converter (10) is (are) held abutting by the flexible blade (33) against a shoulder (34) inside the ring (3) so as to hold the converter (10) in blocked position in the ring (3), while a manual pushing force on the converter is able to remove it from the front portion.

8. Plug (1) according to Claim 1, comprising a packing gland (6) with a nut (60) designed to screw onto the rear portion (4) of the body of the plug.

9. Plug (1) according to Claim 8, comprising a blocking tongue (56) mounted in slidable manner in the locking lever (6) between a blocking position in which it is engaged inside the nut (60) of the packing gland screwed onto the rear portion (4), so as to block the pivoting of the locking lever when it is in its position of locking to the socket, and an unblocking position in which it is disengaged from the inside of the nut so as to release the pivoting of the locking lever when it is in its position of locking to the socket.

10. Assembly, comprising:
- at least one plug (1) according to anyone of Claims 1 to 9;
- at least one socket (7) in which the front portion (3) of the plug body is lodged when the contact or contacts or the optoelectronic converter of the plug is (are) connected to the contact(s) supported by an electronic circuit card of an electronic equipment item, the socket comprising two locking lugs projecting on either side of its cavity to the outside,
the socket (7) and the plug (1) being designed such that the plug (1) is locked in the socket by means of the locking lever in the position of hooking of the hooks (53, 54) to the locking lugs.

11. Assembly according to Claim 10 comprising:
- a plurality of plugs (1) according to anyone of Claims 1 to 9; and
- a plurality of adjacent sockets moulded integrally with a panel of the electronic equipment box, each one comprising a hollow tubular portion forming a rim projecting with respect to the panel on the side of the equipment which is opposite the side where the electronic circuit card is arranged; each rim (70) bearing two locking lugs (71, 72), the locking lugs being continuous between the adjacent sockets;
the sockets (7) and the plugs (1) being designed such that when each plug (1) is connected to one of the sockets and locked to the latter by means of the locking lever in the position of hooking of the hooks to the locking lugs, the arms supporting two adjacent hooks of two adjacent levers bear against each other in planar or pointlike or linear fashion.

12. Method of connecting and locking a plug (1) according to anyone of Claims 1 to 9, to a socket (7) of an electronic equipment box (8) panel (80), comprising the following steps:
a/ lodging of the front portion (3) of the assembled plug (1) in the socket, so as to place in contact the flexible tabs with the socket interior wall and to connect the contact or contacts (22) of the cable (2) or the optoelectronic converter(s) (10) of the plug to the contact or contacts supported by a printed circuit card of the electronic equipment;
b/ pivoting of the locking lever of the plug so as to hook the locking lugs of the socket by the locking hooks of the lever.

13. Method according to Claim 12, comprising after step b/ a step c/ of blocking of the locking lever in the position of locking of the plug to the socket, by the displacement in translation of a blocking tongue (56).
